# EUROPEAN PATENT SPECIFICATION

(11) **EP 3 616 348 B1**
(45) Date of publication and mention of the grant of the patent: **18.03.2026**
(21) Application number: 17906986.9
(22) Date of filing: 28.04.2017
(51) Int. Cl.: H04L 1/1607, H04L 1/1822

(54) **FEEDBACK MESSAGE TRANSMISSION FOR ONE OR MORE PROCESSES**
RÜCKKOPPLUNGSNACHRICHTENÜBERTRAGUNG FÜR EINEN ODER MEHRERE VORGÄNGE
TRANSMISSION DE MESSAGE DE RÉTROACTION POUR UN OU PLUSIEURS PROCESSUS

(43) Date of publication of application: 04.03.2020
(73) Proprietor: Motorola Mobility LLC, Chicago, IL 60654 (US)
(72) Inventor: YAN, Zhi, Beijing 100123 (CN); LEI, Haipeng, Beijing 100085 (CN); LI, Yingying, Haidian Beijing 100083 (CN); WANG, Haiming, Beijing 100032 (CN)
(74) Representative: Openshaw & Co.
(86) International application number: PCT/CN2017/082512
(87) International publication number: WO 2018/195963

(56) References cited:
- CN-A- 102 594 530
- CN-A- 103 138 898
- CN-A- 103 313 321
- CN-A- 103 313 380
- US-A1- 2010 182 949
- MEDIATEK INC: "M-PDCCH for support of HARQ feedback functionality", vol. RAN WG1, no. Malm�, Sweden; 20151005 - 20151009, 4 October 2015 (2015-10-04), XP051002727, Retrieved from the Internet <URL:http://www.3gpp.org/ftp/Meetings_3GPP_SYNC/RAN1/Docs/> [retrieved on 20151004]

## Description

### FIELD

The subject matter disclosed herein relates generally to wireless communications and more particularly relates to feedback message transmission for one or more processes.

### BACKGROUND

The following abbreviations are herewith defined, at least some of which are referred to within the following description: Third Generation Partnership Project ("3GPP"), Positive-Acknowledgment ("ACK"), Binary Phase Shift Keying ("BPSK"), Clear Channel Assessment ("CCA"), Cyclic Prefix ("CP"), Cyclical Redundancy Check ("CRC"), Channel State Information ("CSI"), Common Search Space ("CSS"), Discrete Fourier Transform Spread ("DFTS"), Downlink Control Information ("DCI"), Downlink ("DL"), Downlink Pilot Time Slot ("DwPTS"), Enhanced Clear Channel Assessment ("eCCA"), Enhanced Mobile Broadband ("eMBB"), Evolved Node B ("eNB"), European Telecommunications Standards Institute ("ETSI"), Frame Based Equipment ("FBE"), Frequency Division Duplex ("FDD"), Frequency Division Multiple Access ("FDMA"), Guard Period ("GP"), Hybrid Automatic Repeat Request ("HARQ"), Internet-of-Things ("IoT"), Licensed Assisted Access ("LAA"), Load Based Equipment ("LBE"), Listen-Before-Talk ("LBT"), Long Term Evolution ("LTE"), Multiple Access ("MA"), Modulation Coding Scheme ("MCS"), Machine Type Communication ("MTC"), Multiple Input Multiple Output ("MIMO"), Multi User Shared Access ("MUSA"), Narrowband ("NB"), Negative-Acknowledgment ("NACK") or ("NAK"), Next Generation Node B ("gNB"), Non-Orthogonal Multiple Access ("NOMA"), Orthogonal Frequency Division Multiplexing ("OFDM"), Primary Cell ("PCell"), Physical Broadcast Channel ("PBCH"), Physical Downlink Control Channel ("PDCCH"), Physical Downlink Shared Channel ("PDSCH"), Pattern Division Multiple Access ("PDMA"), Physical Hybrid ARQ Indicator Channel ("PHICH"), Physical Random Access Channel ("PRACH"), Physical Resource Block ("PRB"), Physical Uplink Control Channel ("PUCCH"), Physical Uplink Shared Channel ("PUSCH"), Quality of Service ("QoS"), Quadrature Phase Shift Keying ("QPSK"), Radio Resource Control ("RRC"), Random Access Procedure ("RACH"), Random Access Response ("RAR"), Radio Network Temporary Identifier ("RNTI"), Reference Signal ("RS"), Resource Spread Multiple Access ("RSMA"), Round Trip Time ("RTT"), Receive ("RX"), Sparse Code Multiple Access ("SCMA"), Scheduling Request ("SR"), Single Carrier Frequency Division Multiple Access ("SC-FDMA"), Secondary Cell ("SCell"), Shared Channel ("SCH"), Signal-to-Interference-Plus-Noise Ratio ("SINR"), System Information Block ("SIB"), Transport Block ("TB"), Transport Block Size ("TBS"), Time-Division Duplex ("TDD"), Time Division Multiplex ("TDM"), Transmission Time Interval ("TTI"), Transmit ("TX"), Uplink Control Information ("UCI"), User Entity/Equipment (Mobile Terminal) ("UE"), Uplink ("UL"), Universal Mobile Telecommunications System ("UMTS"), Uplink Pilot Time Slot ("UpPTS"), Ultra-reliability and Low-latency Communications ("URLLC"), and Worldwide Interoperability for Microwave Access ("WiMAX"). As used herein, "HARQ-ACK" may represent collectively the Positive Acknowledge ("ACK") and the Negative Acknowledge ("NACK"). ACK means that a TB is correctly received while NACK (or NAK) means a TB is erroneously received.

In certain wireless communications networks, feedback may be provided via a HARQ-ACK to indicate whether or not data was received correctly. In some configurations, HARQ-ACK resources may take up unnecessary space and/or waste resources. In various configurations, HARQ-ACK feedback may not be aligned properly. In certain configurations HARQ-ACK feedback may be inefficient.

US2010/182949 A1 discloses an automatic repeat request (ARQ) receiver comprising a receiver configured to receive a plurality of ARQ blocks. The ARQ receiver further comprises a processor configured to generate a feedback message configured to provide status of the plurality of ARQ blocks. The feedback message comprises an acknowledgement sequence number (ACK_SN) field and a flag field. The processor is configured to provide a first value in the flag field if the feedback message contains only the ACK_SN field and the flag field. The processor is also configured to provide a second value in the flag field if the feedback message contains one or more fields in addition to the ACK_SN field and the flag field. There is no disclosure or discussion of HARQ.

MEDIATEK INC: "M-PDCCH for support of HARQ feedback functionality", 3gPP DRAFT R1-155952 of October 4, 2015 concerns M-PDCCH support for HARQ feedback functionality. The contribution focus on what is referred to as Option 1C, in which an ACK for a single UE is implicitly indicated via a DCI for new transmission, and NACK for a single UE is implicitly indicated via a smaller DCI for retransmission.

### BRIEF SUMMARY

Apparatuses for transmitting and/or receiving a feedback message indicating feedback for one or more processes are disclosed. Methods and systems also perform the functions of the apparatus. The invention is defined by the appended set of claims.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1 is a schematic block diagram illustrating one embodiment of a wireless communication system for transmitting and/or receiving a feedback message indicating feedback for one or more processes;
Figure 2 is a schematic block diagram illustrating one embodiment of an apparatus that may be used for receiving a feedback message indicating feedback for one or more processes;
Figure 3 is a schematic block diagram illustrating one embodiment of an apparatus that may be used for transmitting a feedback message indicating feedback for one or more processes;
Figure 4 illustrates one embodiment of communications for transmitting and/or receiving a feedback message indicating feedback for one or more processes;
Figure 5 is a schematic flow chart diagram illustrating one embodiment of a method for receiving a feedback message indicating feedback for one or more processes; and
Figure 6 is a schematic flow chart diagram illustrating one embodiment of a method for transmitting a feedback message indicating feedback for one or more processes.

### DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Certain of the functional units described in this specification may be labeled as modules, in order to more particularly emphasize their implementation independence. For example, a module may be implemented as a hardware circuit comprising custom very-large-scale integration ("VLSI") circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in code and/or software for execution by various types of processors. An identified module of code may, for instance, include one or more physical or logical blocks of executable code which may, for instance, be organized as an object, procedure, or function. Nevertheless, the executables of an identified module need not be physically located together, but may include disparate instructions stored in different locations which, when joined logically together, include the module and achieve the stated purpose for the module.

Indeed, a module of code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different computer readable storage devices. Where a module or portions of a module are implemented in software, the software portions are stored on one or more computer readable storage devices.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Code for carrying out operations for embodiments may be any number of lines and may be written in any combination of one or more programming languages including an object oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN") or a wide area network ("WAN"), or the connection may be made to an external computer (for example, through the Internet using an Internet Service Provider).

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. The code may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams block or blocks.

The code may also be stored in a storage device that can direct a computer, other programmable data processing apparatus, or other devices to function in a particular manner, such that the instructions stored in the storage device produce an article of manufacture including instructions which implement the function/act specified in the schematic flowchart diagrams and/or schematic block diagrams block or blocks.

The code may also be loaded onto a computer, other programmable data processing apparatus, or other devices to cause a series of operational steps to be performed on the computer, other programmable apparatus or other devices to produce a computer implemented process such that the code which execute on the computer or other programmable apparatus provide processes for implementing the functions/acts specified in the flowchart and/or block diagram block or blocks.

The schematic flowchart diagrams and/or schematic block diagrams in the Figures illustrate the architecture, functionality, and operation of possible implementations of apparatuses, systems, methods and program products according to various embodiments. In this regard, each block in the schematic flowchart diagrams and/or schematic block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

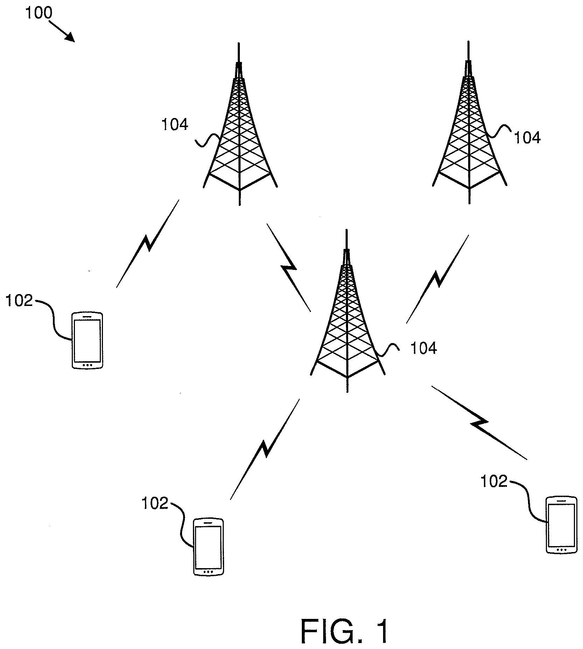

Figure 1 depicts an embodiment of a wireless communication system 100 for transmitting and/or receiving a feedback message indicating feedback for one or more processes. In one embodiment, the wireless communication system 100 includes remote units 102 and base units 104. Even though a specific number of remote units 102 and base units 104 are depicted in Figure 1, one of skill in the art will recognize that any number of remote units 102 and base units 104 may be included in the wireless communication system 100.

In one embodiment, the remote units 102 may include computing devices, such as desktop computers, laptop computers, personal digital assistants ("PDAs"), tablet computers, smart phones, smart televisions (e.g., televisions connected to the Internet), set-top boxes, game consoles, security systems (including security cameras), vehicle on-board computers, network devices (e.g., routers, switches, modems), or the like. In some embodiments, the remote units 102 include wearable devices, such as smart watches, fitness bands, optical head-mounted displays, or the like. Moreover, the remote units 102 may be referred to as subscriber units, mobiles, mobile stations, users, terminals, mobile terminals, fixed terminals, subscriber stations, UE, user terminals, a device, or by other terminology used in the art. The remote units 102 may communicate directly with one or more of the base units 104 via UL communication signals.

The base units 104 may be distributed over a geographic region. In certain embodiments, a base unit 104 may also be referred to as an access point, an access terminal, a base, a base station, a Node-B, an eNB, a gNB, a Home Node-B, a relay node, a device, or by any other terminology used in the art. The base units 104 are generally part of a radio access network that includes one or more controllers communicably coupled to one or more corresponding base units 104. The radio access network is generally communicably coupled to one or more core networks, which may be coupled to other networks, like the Internet and public switched telephone networks, among other networks. These and other elements of radio access and core networks are not illustrated but are well known generally by those having ordinary skill in the art.

In one implementation, the wireless communication system 100 is compliant with the 3GPP protocol, wherein the base unit 104 transmits using an OFDM modulation scheme on the DL and the remote units 102 transmit on the UL using a SC-FDMA scheme or an OFDM scheme. More generally, however, the wireless communication system 100 may implement some other open or proprietary communication protocol, for example, WiMAX, among other protocols. The present disclosure is not intended to be limited to the implementation of any particular wireless communication system architecture or protocol.

The base units 104 may serve a number of remote units 102 within a serving area, for example, a cell or a cell sector via a wireless communication link. The base units 104 transmit DL communication signals to serve the remote units 102 in the time, frequency, and/or spatial domain.

In one embodiment, a remote unit 102 may transmit data to a base unit 104. In certain embodiments, the remote unit 102 may receive a feedback message from the base unit 104 in a control channel. In various embodiments, the feedback message corresponds to the transmitted data, and the feedback message includes: a feedback flag indicating whether the feedback message includes feedback for one or more processes; and a feedback indication indicating feedback for the one or more processes. Accordingly, a remote unit 102 may be used for receiving a feedback message indicating feedback for one or more processes.

In certain embodiments, a base unit 104 may receive data from the remote unit 102. In certain embodiments, the base unit 104 may transmit a feedback message to the remote unit 102 in a control channel. In various embodiments, the feedback message corresponds to the received data, and the feedback message includes: a feedback flag indicating whether the feedback message includes feedback for one or more processes; and a feedback indication indicating feedback for the one or more processes. Accordingly, a base unit 104 may be used for transmitting a feedback message indicating feedback for one or more processes.

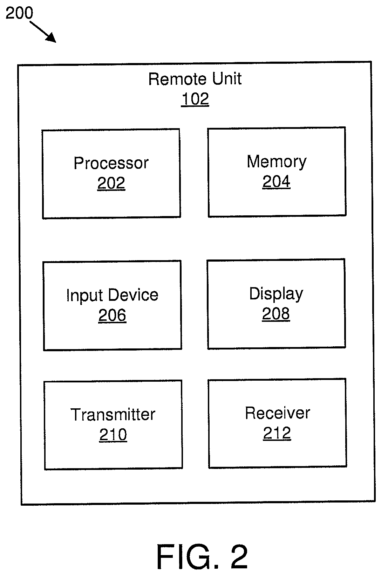

Figure 2 depicts one embodiment of an apparatus 200 that is used for receiving a feedback message indicating feedback for one or more processes. The apparatus 200 includes one embodiment of the remote unit 102. Furthermore, the remote unit 102 includes a processor 202, a memory 204, an input device 206, a display 208, a transmitter 210, and a receiver 212. In some embodiments, the input device 206 and the display 208 are combined into a single device, such as a touchscreen. In certain embodiments, the remote unit 102 may not include any input device 206 and/or display 208. In various embodiments, the remote unit 102 may include one or more of the processor 202, the memory 204, the transmitter 210, and the receiver 212, and may not include the input device 206 and/or the display 208.

The processor 202, in one embodiment, may include any known controller capable of executing computer-readable instructions and/or capable of performing logical operations. For example, the processor 202 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 202 executes instructions stored in the memory 204 to perform the methods and routines described herein. The processor 202 is communicatively coupled to the memory 204, the input device 206, the display 208, the transmitter 210, and the receiver 212.

The memory 204, in one embodiment, is a computer readable storage medium. In some embodiments, the memory 204 includes volatile computer storage media. For example, the memory 204 may include a RAM, including dynamic RAM ("DRAM"), synchronous dynamic RAM ("SDRAM"), and/or static RAM ("SRAM"). In some embodiments, the memory 204 includes non-volatile computer storage media. For example, the memory 204 may include a hard disk drive, a flash memory, or any other suitable non-volatile computer storage device. In some embodiments, the memory 204 includes both volatile and non-volatile computer storage media. In some embodiments, the memory 204 stores data relating to feedback. In some embodiments, the memory 204 also stores program code and related data, such as an operating system or other controller algorithms operating on the remote unit 102.

The input device 206, in one embodiment, may include any known computer input device including a touch panel, a button, a keyboard, a stylus, a microphone, or the like. In some embodiments, the input device 206 may be integrated with the display 208, for example, as a touchscreen or similar touch-sensitive display. In some embodiments, the input device 206 includes a touchscreen such that text may be input using a virtual keyboard displayed on the touchscreen and/or by handwriting on the touchscreen. In some embodiments, the input device 206 includes two or more different devices, such as a keyboard and a touch panel.

The display 208, in one embodiment, may include any known electronically controllable display or display device. The display 208 may be designed to output visual, audible, and/or haptic signals. In some embodiments, the display 208 includes an electronic display capable of outputting visual data to a user. For example, the display 208 may include, but is not limited to, an LCD display, an LED display, an OLED display, a projector, or similar display device capable of outputting images, text, or the like to a user. As another, non-limiting, example, the display 208 may include a wearable display such as a smart watch, smart glasses, a heads-up display, or the like. Further, the display 208 may be a component of a smart phone, a personal digital assistant, a television, a table computer, a notebook (laptop) computer, a personal computer, a vehicle dashboard, or the like.

In certain embodiments, the display 208 includes one or more speakers for producing sound. For example, the display 208 may produce an audible alert or notification (e.g., a beep or chime). In some embodiments, the display 208 includes one or more haptic devices for producing vibrations, motion, or other haptic feedback. In some embodiments, all or portions of the display 208 may be integrated with the input device 206. For example, the input device 206 and display 208 may form a touchscreen or similar touch-sensitive display. In other embodiments, the display 208 may be located near the input device 206.

The transmitter 210 is used to provide UL communication signals to the base unit 104 and the receiver 212 is used to receive DL communication signals from the base unit 104. In certain embodiments, the transmitter 210 may be used to transmit data. In certain embodiments, the receiver 212 may be used to receive a feedback message in a control channel. In various embodiments, the feedback message corresponds to the transmitted data, and the feedback message includes: a feedback flag indicating whether the feedback message includes feedback for one or more processes; and a feedback indication indicating feedback for the one or more processes. Although only one transmitter 210 and one receiver 212 are illustrated, the remote unit 102 may have any suitable number of transmitters 210 and receivers 212. The transmitter 210 and the receiver 212 may be any suitable type of transmitters and receivers. In one embodiment, the transmitter 210 and the receiver 212 may be part of a transceiver.

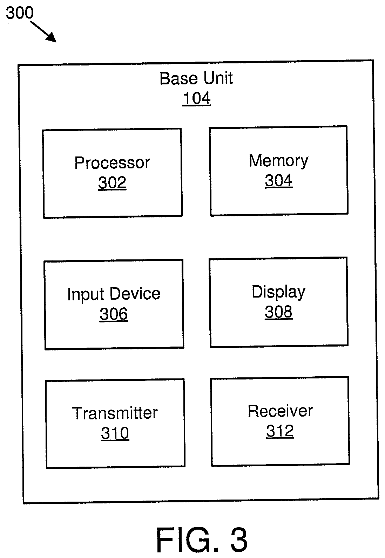

Figure 3 depicts one embodiment of an apparatus 300 that is used for transmitting a feedback message indicating feedback for one or more processes. The apparatus 300 includes one embodiment of the base unit 104. Furthermore, the base unit 104 includes a processor 302, a memory 304, an input device 306, a display 308, a transmitter 310, and a receiver 312. As may be appreciated, the processor 302, the memory 304, the input device 306, the display 308, the transmitter 310, and the receiver 312 may be substantially similar to the processor 202, the memory 204, the input device 206, the display 208, the transmitter 210, and the receiver 212 of the remote unit 102, respectively.

In various embodiments, the receiver 312 may be used to receive data. In various embodiments, the transmitter 310 may be used to transmit a feedback message in a control channel. In various embodiments, the feedback message corresponds to the received data, and the feedback message includes: a feedback flag indicating whether the feedback message includes feedback for one or more processes; and a feedback indication indicating feedback for the one or more processes. Although only one transmitter 310 and one receiver 312 are illustrated, the base unit 104 may have any suitable number of transmitters 310 and receivers 312. The transmitter 310 and the receiver 312 may be any suitable type of transmitters and receivers. In one embodiment, the transmitter 310 and the receiver 312 may be part of a transceiver.

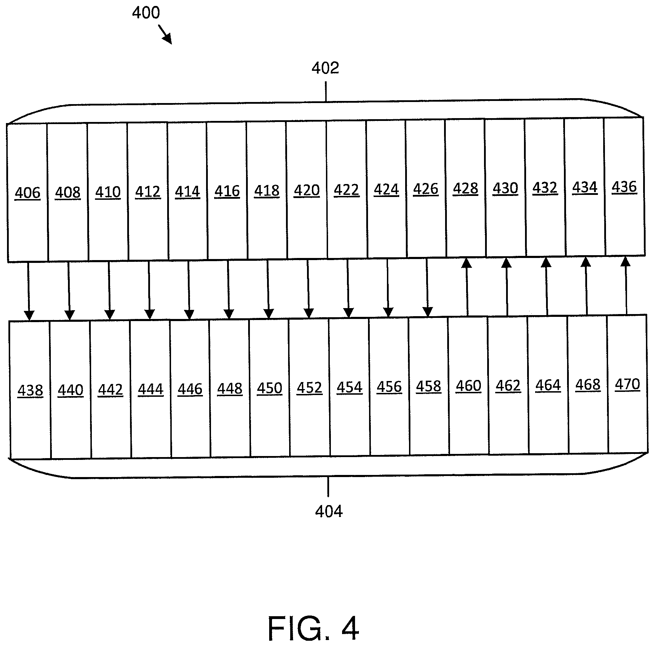

In certain embodiments, a remote unit 102 monitors a DCI for an uplink grant and HARQ-ACK feedback in the same size DCI (i.e., LTE enhanced DCI format 6A/B). In such embodiments, a size of the DCI may be unchanged from a legacy DCI. The HARQ-ACK feedback includes a HARQ-ACK flag, a mode flag (e.g., indicating a time division duplex mode, a frequency division duplex mode, an uplink mode, and/or a downlink mode), and/or an ACK/NACK indication for each HARQ process. Further, some state of a resource block assignment field in DCI (i.e., LTE DCI format 6-0A) is used as a HARQ-ACK flag and remaining bits in the DCI may be used for ACK/NACK indication for each HARQ process. Accordingly, ACK/NACK indications for multiple HARQ processes are provided in the same DCI. Figure 4 illustrates one embodiment of indications provided in DCI.

**Table 1**

| DCI format 6A field | Bit size | When used as a HARQ-ACK DCI |
|---|---|---|
| Flag format 6-0A/format 6-1A differentiation | 1 | Differentiates downlink scheduling and uplink grant |
| Frequency hopping flag | 1 | Positive HARQ-ACK for UL HARQ process #0 |
| Resource block assignment | 5-9 | Last 5 bit "11111" indicates HARQ feedback flag true |
| Modulation and coding scheme | 4 | Positive HARQ-ACK for UL HARQ process #1-4 |
| Repetition number | 2 | Positive HARQ-ACK for UL HARQ process #5-6 |
| HARQ process number | 3 | Positive HARQ-ACK for UL HARQ process #7 |
| New data indicator | 1 | Reserved |
| Redundancy version | 2 | Reserved |
| TPC command for scheduled PUSCH | 2 | Reserved |
| UL index | 2 | Reserved |
| Downlink Assignment Index (DAI) | 2 | Reserved |
| CSI request | 1 | Reserved |
| SRS request | 1 | Reserved |
| DCI subframe repetition number | 2 | Reserved |

Table 1 illustrates one embodiment in which LTE enhanced DCI format 6A fields are used to provide a HARQ feedback flag and to provide ACK/NACK indications for one or multiple HARQ processes. Specifically, if the resource block assignment is "11111" then the five bits of the resource block assignment indicate that the DCI includes HARQ-ACK feedback. In contrast, if the resource block assignment is not "11111" then the five bits of the resource block assignment indicate that the DCI does not include HARQ-ACK feedback. Furthermore, various bits as indicated are used to indicate ACK/NACK for different HARQ processes. Moreover, the flag format 6-0A/format 6-1A differentiation field may be used as a mode flag.

Figure 4 illustrates one embodiment of communications 400 for transmitting and/or receiving a feedback message indicating feedback for one or more processes. Specifically, remote unit communications 402 and base unit communications 404 are illustrated.

Moreover, the remote unit communications 402 include a first communication 406 including a first uplink transmission from the remote unit 102 to the base unit 104, a second communication 408 including a second uplink transmission from the remote unit 102 to the base unit 104, a third communication 410 including a third uplink transmission from the remote unit 102 to the base unit 104, a fourth communication 412 including a fourth uplink transmission from the remote unit 102 to the base unit 104, a fifth communication 414 including a fifth uplink transmission from the remote unit 102 to the base unit 104, a sixth communication 416 including a sixth uplink transmission from the remote unit 102 to the base unit 104, a seventh communication 418 including a seventh uplink transmission from the remote unit 102 to the base unit 104, an eighth communication 420 including an eighth uplink transmission from the remote unit 102 to the base unit 104, a ninth communication 422 including a ninth uplink transmission from the remote unit 102 to the base unit 104, a tenth communication 424 including a tenth uplink transmission from the remote unit 102 to the base unit 104, an eleventh communication 426 including an eleventh uplink transmission from the remote unit 102 to the base unit 104, a twelfth communication 428 including a first downlink transmission from the the base unit 104, a thirteenth communication 430 including a second downlink transmission from the base unit 104, a fourteenth communication 432 including a third downlink transmission from the base unit 104, a fifteenth communication 434 including a fourth downlink transmission from the base unit 104, and a sixteenth communication 436 including a fifth downlink transmission from the base unit 104. Communications 438 through 470 indicate communications received and/or transmitted by the base unit 104.

One or more of the downlink transmissions that the remote unit 102 receives from the base unit 104 (e.g., 428 through 436) may include one or more indications for ACK/NACK for prior uplink transmissions (e.g., processes). For example, the twelfth communication 428 may indicate ACK/NACK for communications 406, 408, and/or 410. As another example, the thirteenth communication 430 may indicate ACK/NACK for communication 412. As a further example, the sixteenth communication 436 may indicate ACK/NACK for communications 420, 422, 424, and/or 426.

In certain embodiments, new DCI format for common DCI may be used for HARQ-ACK feedback. In such embodiments, an RNTI value and an index may be transmitted to a remote unit 102 (e.g., via RRC signaling). In certain embodiments, multiple remote units 102 may share the same RNTI (e.g., a group RNTI), and these remote units 102 may be in the same coverage level. In various embodiments, different indexes may be transmitted to different remote units 102 (e.g., having a range from 0 to Nmax).

In some embodiments, remote units 102 may monitor PDCCH with the RNTI value and find a HARQ-ACK indication via the index. In certain embodiments, a DCI size may be determined by a size of the HARQ-ACK indication and Nmax. In various embodiments, the DCI size may be fixed. In such embodiments, if a multiplexed remote unit 102 is smaller than Nmax, zeros may be padded in the DCI.

In various embodiments, the HARQ-ACK indication may include a bitmap positive HARQ-ACK for each process such that multiple processes may receive ACK/NACK in one DCI. In some embodiments, the HARQ-ACK indication may include a HARQ process number and an ACK/NACK indication in which ACK/NACK for one process may be in one DCI.

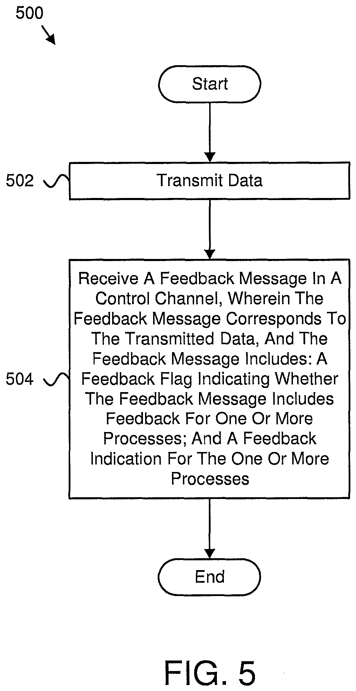

Figure 5 is a schematic flow chart diagram illustrating one embodiment of a method 500 for receiving a feedback message indicating feedback for one or more processes. The method 500 is performed by an apparatus, such as the remote unit 102. In certain embodiments, the method 500 may be performed by a processor executing program code, for example, a microcontroller, a microprocessor, a CPU, a GPU, an auxiliary processing unit, a FPGA, or the like.

The method 500 includes transmitting 502 data. Additionally, the method 500 includes receiving 504 a feedback message in a control channel (e.g., PUSCH). The feedback message corresponds to the transmitted data, and the feedback message includes: a feedback flag indicating whether the feedback message includes feedback for one or more processes; and a feedback indication indicating feedback for the one or more processes.

Further, the feedback message includes hybrid automatic repeat request feedback. In a further embodiment, the feedback message indicates an ACKNOWLEDGEMENT in response to the data being correctly decoded and a NEGATIVE ACKNOWLEDGEMENT in response to the data not being correctly decoded. In certain embodiments, the feedback message further includes a mode flag. In various embodiments, the mode flag indicates a time division duplex mode, a frequency division duplex mode, an uplink mode, and/or a downlink mode. In some embodiments, the feedback indication indicating feedback for the one or more processes includes feedback selected from the group including: positive feedback and negative feedback. In one embodiment, the feedback indication indicating feedback for the one or more processes further includes a number of each process of the one or more processes.

Moreover, the one or more processes include multiple processes, and the feedback indication indicating feedback for the one or more processes includes feedback for the multiple processes in a bit map manner corresponding to a number of each process of the multiple processes. In some embodiments, feedback for each process of the multiple processes is selected from the group including: positive feedback and negative feedback.

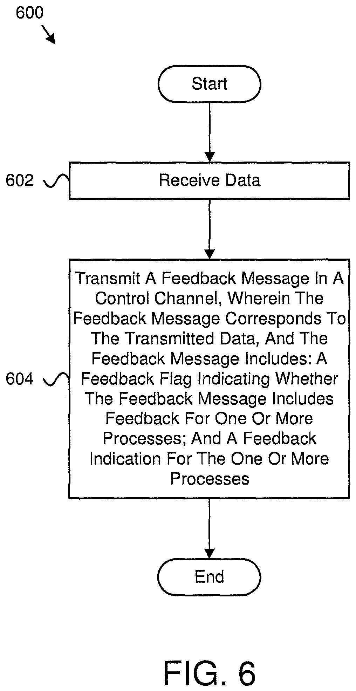

Figure 6 is a schematic flow chart diagram illustrating one embodiment of a method 600 for transmitting a feedback message indicating feedback for one or more processes. The method 600 is performed by an apparatus, such as the base unit 104. In certain embodiments, the method 600 may be performed by a processor executing program code, for example, a microcontroller, a microprocessor, a CPU, a GPU, an auxiliary processing unit, a FPGA, or the like.

The method 600 includes receiving 602 data. The method 600 includes transmitting 604 a feedback message in a control channel (e.g., PUSCH). Further, the feedback message corresponds to the received data, and the feedback message includes: a feedback flag indicating whether the feedback message includes feedback for one or more processes; and a feedback indication indicating feedback for the one or more processes.

Further, the feedback message includes hybrid automatic repeat request feedback. In a further embodiment, the feedback message indicates an ACKNOWLEDGEMENT in response to the data being correctly decoded and a NEGATIVE ACKNOWLEDGEMENT in response to the data not being correctly decoded. In certain embodiments, the feedback message further includes a mode flag. In various embodiments, the mode flag indicates a time division duplex mode, a frequency division duplex mode, an uplink mode, and/or a downlink mode. In some embodiments, the feedback indication indicating feedback for the one or more processes includes feedback selected from the group including: positive feedback and negative feedback. In one embodiment, the feedback indication indicating feedback for the one or more processes further includes a number of each process of the one or more processes.

Moreover, the one or more processes include multiple processes, and the feedback indication indicating feedback for the one or more processes includes feedback for the multiple processes in a bit map manner corresponding to a number of each process of the multiple processes. In some embodiments, feedback for each process of the multiple processes is selected from the group including: positive feedback and negative feedback.

Embodiments may be practiced in other specific forms. The described embodiments are to be considered in all respects only as illustrative and not restrictive. The scope of the invention is, therefore, indicated by the appended claims rather than by the foregoing description. All changes which come within the meaning of the claims are to be embraced within their scope.

## Claims

1. An apparatus (102) comprising:
a transmitter (210) configured to transmit data; and
a receiver (212) configured to receive a feedback message in downlink control
information, DCI, over a control channel, wherein the feedback message corresponds to the transmitted data, and the feedback message comprises hybrid automatic repeat request, HARQ, feedback in the form of:
a feedback flag indicating whether the feedback message includes feedback for a plurality of HARQ processes; and
a feedback indication indicating feedback for the plurality of HARQ processes;
wherein the feedback indication indicates the HARQ feedback for the plurality of HARQ processes in a bit map manner corresponding to each process of the plurality of HARQ processes,
wherein LTE DCI format 6-0A is used for the feedback indication indicating feedback for the plurality of HARQ processes,
and wherein a state of the resource block assignment field in the LTE DCI format 6-0A is used for the feedback flag.

2. The apparatus of claim 1, wherein the feedback message indicates an ACKNOWLEDGEMENT in response to the data being correctly decoded and a NEGATIVE ACKNOWLEDGEMENT in response to the data not being correctly decoded.

3. The apparatus of claim 1, wherein the feedback message further comprises a mode flag, and optionally wherein the mode flag indicates a time division duplex mode, a frequency division duplex mode, an uplink mode, a downlink mode, or some combination thereof.

4. The apparatus of claim 1, wherein the feedback indication indicating feedback for the plurality of HARQ processes includes feedback selected from the group comprising: positive feedback and negative feedback.

5. The apparatus of claim 1, wherein the feedback indication indicating feedback for plurality of HARQ processes further includes a number of each HARQ process of the plurality of HARQ processes.

6. A method (500) performed by an apparatus (102), the method comprising:
transmitting (502) data; and
receiving (504) a feedback message in downlink control information, DCI, over a control channel, wherein the feedback message corresponds to the transmitted data, and the feedback message comprises hybrid automatic repeat request, HARQ, feedback in the form of:
a feedback flag indicating whether the feedback message includes feedback for a plurality of HARQ processes; and
a feedback indication indicating feedback for the plurality of HARQ processes;
wherein the feedback indication indicates the HARQ feedback for the plurality of HARQ processes in a bit map manner corresponding to each process of the plurality of HARQ processes,
wherein LTE DCI format 6-0A is used for the feedback indication indicating feedback for the plurality of HARQ processes,
and wherein a state of the resource block assignment field in the LTE DCI format 6-0A is used for the feedback flag.

7. An apparatus (104) comprising:
a receiver (312) configured to receive data; and
a transmitter (310) configured to transmit a feedback message in downlink control information, DCI, over a control channel, wherein the feedback message corresponds to the received data, and the feedback message comprises hybrid automatic repeat request, HARQ, feedback in the form of:
a feedback flag indicating whether the feedback message includes feedback for a plurality of HARQ processes; and
a feedback indication indicating feedback for the plurality of HARQ processes;
wherein the feedback indication indicates the HARQ feedback for the plurality of HARQ processes in a bit map manner corresponding to each process of the plurality of HARQ processes,
wherein DCI format 6-0A is used for the feedback indication indicating feedback for the plurality of HARQ processes,
and wherein a state of the resource block assignment field in the LTE DCI format 6-0A is used for the feedback flag.

8. The apparatus of claim 7, wherein the feedback message indicates an ACKNOWLEDGEMENT in response to the data being correctly decoded and a NEGATIVE ACKNOWLEDGEMENT in response to the data not being correctly decoded.

9. The apparatus of claim 7, wherein the feedback message further comprises a mode flag, and optionally wherein the mode flag indicates a time division duplex mode, a frequency division duplex mode, an uplink mode, a downlink mode, or some combination thereof.

10. The apparatus of claim 7, wherein the feedback indication indicating feedback for the plurality of HARQ processes includes feedback selected from the group comprising:
positive feedback and negative feedback, and optionally wherein the feedback indication indicating feedback for the plurality of HARQ processes further includes a number of each process of the plurality of HARQ processes.

11. A method (600) performed by an apparatus (104), the method comprising:
receiving (602) data; and
transmitting (604) a HARQ feedback message in downlink control information, DCI,
over a control channel, wherein the feedback message corresponds to the received data, and the feedback message comprises hybrid automatic repeat request, HARQ, feedback in the form of:
a feedback flag indicating whether the feedback message includes feedback for a plurality of HARQ processes; and
a feedback indication indicating feedback for the plurality of HARQ processes;
wherein the feedback indication indicates the HARQ feedback for the plurality of HARQ processes in a bit map manner corresponding to each process of the plurality of HARQ processes,
wherein LTE DCI format 6-0A is used for the feedback indication indicating feedback for the plurality of HARQ processes,
and wherein a state of the resource block assignment field in the LTE DCI format 6-0A is used for the feedback flag.

## Patentansprüche

1. Vorrichtung (102), umfassend:
einen Sender (210), der dazu konfiguriert ist, Daten zu senden; und
einen Empfänger (212), der dazu konfiguriert ist, eine Feedback-Nachricht in Downlink-Steuerinformationen, DCI, über einen Steuerkanal zu empfangen, wobei die Feedback-Nachricht den gesendeten Daten entspricht und die Feedback-Nachricht eine Hybrid-Automatic-Repeat-Request-Rückmeldung, HARQ-Rückmeldung, umfasst in der Form:
eines Feedback-Flags, das angibt, ob die Feedback-Nachricht ein Feedback für eine Vielzahl von HARQ-Prozessen einschließt; und
einer Feedback-Angabe, die ein Feedback für die Vielzahl von HARQ-Prozessen angibt;
wobei die Feedback-Angabe das HARQ-Feedback für die Vielzahl von HARQ-Prozessen auf eine Bitmap-Weise angibt, die jedem Prozess der Vielzahl von HARQ-Prozessen entspricht,
wobei ein LTE-DCI-Format 6-0A für die Feedback-Angabe, die ein Feedback für die Vielzahl von HARQ-Prozessen angibt, verwendet wird und wobei ein Zustand des Ressourcenblockzuordnungsfelds in dem LTE-DCI-Format 6-0A für das Feedback-Flag verwendet wird.

2. Vorrichtung nach Anspruch 1, wobei die Feedback-Nachricht eine QUITTIERUNG als Reaktion darauf, dass die Daten korrekt decodiert sind, und eine NEGATIVE QUITTIERUNG als Reaktion darauf, dass die Daten nicht korrekt decodiert sind, angibt.

3. Vorrichtung nach Anspruch 1, wobei die Feedback-Nachricht ferner ein Modus-Flag umfasst, und optional wobei das Modus-Flag einen Zeitduplexmodus, einen Frequenzduplexmodus, einen Uplink-Modus, einen Downlink-Modus oder eine beliebige Kombination davon angibt.

4. Vorrichtung nach Anspruch 1, wobei die Feedback-Angabe, die ein Feedback für die Vielzahl von HARQ-Prozessen angibt, ein Feedback einschließt, das ausgewählt ist aus der Gruppe umfassend: positives Feedback und negatives Feedback.

5. Vorrichtung nach Anspruch 1, wobei die Feedback-Angabe, die ein Feedback für die Vielzahl von HARQ-Prozessen angibt, ferner eine Nummer jedes HARQ-Prozesses der Vielzahl von HARQ-Prozessen einschließt.

6. Verfahren (500), das von einer Vorrichtung (102) durchgeführt wird, wobei das Verfahren umfasst:
Senden (502) von Daten; und
Empfangen (504) einer Feedback-Nachricht in Downlink-Steuerinformationen, DCI, über einen Steuerkanal, wobei die Feedback-Nachricht den gesendeten Daten entspricht und die Feedback-Nachricht eine Hybrid-Automatic-Repeat-Request-Rückmeldung, HARQ-Rückmeldung, umfasst in der Form:
eines Feedback-Flags, das angibt, ob die Feedback-Nachricht ein Feedback für eine Vielzahl von HARQ-Prozessen einschließt; und
einer Feedback-Angabe, die ein Feedback für die Vielzahl von HARQ-Prozessen angibt;
wobei die Feedback-Angabe das HARQ-Feedback für die Vielzahl von HARQ-Prozessen auf eine Bitmap-Weise angibt, die jedem Prozess der Vielzahl von HARQ-Prozessen entspricht,
wobei ein LTE-DCI-Format 6-0A für die Feedback-Angabe, die ein Feedback für die Vielzahl von HARQ-Prozessen angibt, verwendet wird und wobei ein Zustand des Ressourcenblockzuordnungsfelds in dem LTE-DCI-Format 6-0A für das Feedback-Flag verwendet wird.

7. Vorrichtung (104), umfassend:
einen Empfänger (312), der dazu konfiguriert ist, Daten zu empfangen; und
einen Sender (310), der dazu konfiguriert ist, eine Feedback-Nachricht in Downlink-Steuerinformationen, DCI, über einen Steuerkanal zu senden, wobei die Feedback-Nachricht den empfangenen Daten entspricht und die Feedback-Nachricht eine Hybrid-Automatic-Repeat-Request-Rückmeldung, HARQ-Rückmeldung, umfasst in der Form:
eines Feedback-Flags, das angibt, ob die Feedback-Nachricht ein Feedback für eine Vielzahl von HARQ-Prozessen einschließt; und
einer Feedback-Angabe, die ein Feedback für die Vielzahl von HARQ-Prozessen angibt;
wobei die Feedback-Angabe das HARQ-Feedback für die Vielzahl von HARQ-Prozessen auf eine Bitmap-Weise angibt, die jedem Prozess der Vielzahl von HARQ-Prozessen entspricht,
wobei ein DCI-Format 6-0A für die Feedback-Angabe, die ein Feedback für die Vielzahl von HARQ-Prozessen angibt, verwendet wird und wobei ein Zustand des Ressourcenblockzuordnungsfelds in dem LTE-DCI-Format 6-0A für das Feedback-Flag verwendet wird.

8. Vorrichtung nach Anspruch 7, wobei die Feedback-Nachricht eine QUITTIERUNG als Reaktion darauf, dass die Daten korrekt decodiert sind, und eine NEGATIVE QUITTIERUNG als Reaktion darauf, dass die Daten nicht korrekt decodiert sind, angibt.

9. Vorrichtung nach Anspruch 7, wobei die Feedback-Nachricht ferner ein Modus-Flag umfasst, und optional wobei das Modus-Flag einen Zeitduplexmodus, einen Frequenzduplexmodus, einen Uplink-Modus, einen Downlink-Modus oder eine beliebige Kombination davon angibt.

10. Vorrichtung nach Anspruch 7, wobei die Feedback-Angabe, die ein Feedback für die Vielzahl von HARQ-Prozessen angibt, ein Feedback einschließt, das ausgewählt ist aus der Gruppe umfassend: positives Feedback und negatives Feedback, und optional wobei die Feedback-Angabe, die ein Feedback für die Vielzahl von HARQ-Prozessen angibt, ferner eine Nummer jedes Prozesses der Vielzahl von HARQ-Prozessen einschließt.

11. Verfahren (600), das von einer Vorrichtung (104) durchgeführt wird, wobei das Verfahren umfasst:
Empfangen (602) von Daten; und
Senden (604) einer HARQ-Feedback-Nachricht in Downlink-Steuerinformationen, DCL, über einen Steuerkanal, wobei die Feedback-Nachricht den empfangenen Daten entspricht und die Feedback-Nachricht eine Hybrid-Automatic-Repeat-Request-Rückmeldung, HARQ-Rückmeldung, umfasst in der Form:
eines Feedback-Flags, das angibt, ob die Feedback-Nachricht ein Feedback für eine Vielzahl von HARQ-Prozessen einschließt; und
einer Feedback-Angabe, die ein Feedback für die Vielzahl von HARQ-Prozessen angibt;
wobei die Feedback-Angabe das HARQ-Feedback für die Vielzahl von HARQ-Prozessen auf eine Bitmap-Weise angibt, die jedem Prozess der Vielzahl von HARQ-Prozessen entspricht,
wobei ein LTE-DCI-Format 6-0A für die Feedback-Angabe, die ein Feedback für die Vielzahl von HARQ-Prozessen angibt, verwendet wird und wobei ein Zustand des Ressourcenblockzuordnungsfelds in dem LTE-DCI-Format 6-0A für das Feedback-Flag verwendet wird.

## Revendications

1. Appareil (102) comprenant :
un émetteur (210) configuré pour transmettre des données ; et
un récepteur (212) configuré pour recevoir un message de retour d'information dans des informations de contrôle de liaison descendante, DCI, sur un canal de contrôle, où le message de retour d'information correspond aux données transmises, et le message de retour d'information comprend un retour d'information de type demande de répétition automatique hybride, HARQ, sous la forme :
d'un indicateur de retour d'information indiquant si le message de retour d'information inclut un retour d'information pour une pluralité de processus HARQ ; et
d'une indication de retour d'information indiquant un retour d'information pour la pluralité de processus HARQ ;
où l'indication de retour d'information indique le retour d'information HARQ pour la pluralité de processus HARQ à la manière d'une carte de bits correspondant à chaque processus de la pluralité de processus HARQ,
où le format LTE DCI 6-0A est utilisé pour l'indication de retour d'information indiquant un retour d'information pour la pluralité de processus HARQ, et où un état du champ d'attribution de bloc de ressources dans le format LTE DCI 6-0A est utilisé pour l'indicateur de retour d'information.

2. Appareil selon la revendication 1, où le message de retour d'information indique un ACCUSÉ DE RÉCEPTION en réponse au décodage correct des données et un ACCUSÉ DE RÉCEPTION NÉGATIF en réponse au décodage incorrect des données.

3. Appareil selon la revendication 1, où le message de retour d'information comprend en outre un indicateur de mode, et où, en option, l'indicateur de mode indique un mode duplex à répartition dans le temps, un mode duplex à répartition en fréquence, un mode liaison montante, un mode liaison descendante ou une combinaison de ceux-ci.

4. Appareil selon la revendication 1, où l'indication de retour d'information indiquant un retour d'information pour la pluralité de processus HARQ inclut un retour d'information sélectionné dans le groupe comprenant : un retour d'information positif et un retour d'information négatif.

5. Appareil selon la revendication 1, où l'indication de retour d'information indiquant un retour d'information pour la pluralité de processus HARQ inclut en outre un nombre de chaque processus HARQ de la pluralité de processus HARQ.

6. Procédé (500) mis en œuvre par un appareil (102), le procédé comprenant :
la transmission (502) de données ; et
la réception (504) d'un message de retour d'information dans des informations de contrôle de liaison descendante, DCI, sur un canal de contrôle, où le message de retour d'information correspond aux données transmises, et le message de retour d'information comprend un retour d'information de type demande de répétition automatique hybride, HARQ, sous la forme :
d'un indicateur de retour d'information indiquant si le message de retour d'information inclut un retour d'information pour une pluralité de processus HARQ ; et
d'une indication de retour d'information indiquant un retour d'information pour la pluralité de processus HARQ ;
où l'indication de retour d'information indique le retour d'information HARQ pour la pluralité de processus HARQ à la manière d'une carte de bits correspondant à chaque processus de la pluralité de processus HARQ,
où le format LTE DCI 6-0A est utilisé pour l'indication de retour d'information indiquant un retour d'information pour la pluralité de processus HARQ, et où un état du champ d'attribution de bloc de ressources dans le format LTE DCI 6-0A est utilisé pour l'indicateur de retour d'information.

7. Appareil (104) comprenant :
un récepteur (312) configuré pour recevoir des données ; et
un émetteur (310) configuré pour transmettre un message de retour d'information dans des informations de contrôle de liaison descendante, DCI, sur un canal de contrôle, où le message de retour d'information correspond aux données reçues, et le message de retour d'information comprend un retour d'information de type demande de répétition automatique hybride, HARQ, sous la forme :
d'un indicateur de retour d'information indiquant si le message de retour d'information inclut un retour d'information pour une pluralité de processus HARQ ; et
d'une indication de retour d'information indiquant un retour d'information pour la pluralité de processus HARQ ;
où l'indication de retour d'information indique le retour d'information HARQ pour la pluralité de processus HARQ à la manière d'une carte de bits correspondant à chaque processus de la pluralité de processus HARQ,
où le format DCI 6-0A est utilisé pour l'indication de retour d'information indiquant un retour d'information pour la pluralité de processus HARQ, et où un état du champ d'attribution de bloc de ressources dans le format LTE DCI 6-0A est utilisé pour l'indicateur de retour d'information.

8. Appareil selon la revendication 7, où le message de retour d'information indique un ACCUSÉ DE RÉCEPTION en réponse au décodage correct des données et un ACCUSÉ DE RÉCEPTION NÉGATIF en réponse au décodage incorrect des données.

9. Appareil selon la revendication 7, où le message de retour d'information comprend en outre un indicateur de mode, et où, en option, l'indicateur de mode indique un mode duplex à répartition dans le temps, un mode duplex à répartition en fréquence, un mode liaison montante, un mode liaison descendante ou une combinaison de ceux-ci.

10. Appareil selon la revendication 7, où l'indication de retour d'information indiquant un retour d'information pour la pluralité de processus HARQ inclut un retour d'information sélectionné dans le groupe comprenant : un retour d'information positif et un retour d'information négatif, et où, en option, l'indication de retour d'information indiquant un retour d'information pour la pluralité de processus HARQ inclut en outre un nombre de chaque processus de la pluralité de processus HARQ.

11. Procédé (600) mis en œuvre par un appareil (104), le procédé comprenant :
la réception (602) de données ; et
la transmission (604) d'un message de retour d'information HARQ dans des informations de contrôle de liaison descendante, DCI, sur un canal de contrôle, où le message de retour d'information correspond aux données reçues, et le message de retour d'information comprend un retour d'information de type demande de répétition automatique hybride, HARQ, sous la forme :
d'un indicateur de retour d'information indiquant si le message de retour d'information inclut un retour d'information pour une pluralité de processus HARQ ; et
d'une indication de retour d'information indiquant un retour d'information pour la pluralité de processus HARQ ;
où l'indication de retour d'information indique le retour d'information HARQ pour la pluralité de processus HARQ à la manière d'une carte de bits correspondant à chaque processus de la pluralité de processus HARQ,
où le format LTE DCI 6-0A est utilisé pour l'indication de retour d'information indiquant un retour d'information pour la pluralité de processus HARQ, et où un état du champ d'attribution de bloc de ressources dans le format LTE DCI 6-0A est utilisé pour l'indicateur de retour d'information.
